# EUROPEAN PATENT SPECIFICATION

(11) **EP 1 589 061 B1**
(45) Date of publication and mention of the grant of the patent: **19.07.2006**
(21) Application number: 05008146.2
(22) Date of filing: 14.04.2005
(51) Int. Cl.: C08J 5/18

(54) **A process for obtaining thermoplastic polymer films**
Verfahren zur Herstellung von Folien aus thermoplastischem polymeren Kunststoff
Procédé pour obtenir des films à base de polymères thermoplastiques

(30) Priority: 22.04.2004 IT MI20040788
(43) Date of publication of application: 26.10.2005
(73) Proprietor: Solvay Solexis S.p.A., 20121 Milano (IT)
(72) Inventor: Polastri, Fabio, 20052 Monza, Milano (IT); Besana, Giambattista, 22066 Mariano Comense, Como (IT)
(74) Representative: Sama, Daniele

(56) References cited:
- GB-A- 593 240
- US-A- 3 707 416
- US-A- 5 939 198

## Description

The present invention relates to a process for preparing films and sheets of thermoplastic or thermoprocessable (per)-fluorinated polymers for applications in the electronics field, for example for the laminate building to prepare mother cards, for applications of mechanical type, for example to allow the welding between PTFE coated cloths usable for industrial conveyor belts, or for applications of architectonic type, for example in the building coatings.

It is known from the prior art that the films of thermoprocessable materials, in particular of (per)fluorinated polymers, can be obtained by various processing types, starting from the polymer extrusion of melt polymers. As known, the polymer is melted in a screw extruder and the extruded profile, still at the melted state, is then finished at the required thickness by various technologies, in function of the film to be obtained. For example the blowing for tubular films and the calendering for flat films are used. See for example in "Plastic Extrusion Technology", Friedhelm Hensen Ed., New York, 1988, pages 95, 183-184.

Generally with extruded films, it is meant films obtained with the above technologies.

The use of said technologies depends on the processability in extrusion of the polymeric material. This implies that the polymer not only must be stable at temperatures higher than the melting temperature, but also that the melt viscosity must not be too high. Indeed polymers having high viscosity at the melted state are hardly processable in extrusion.

Furthermore it has been found by the Applicant that with these technologies the obained (per)fluorinated copolymer films have not very high elongation at break.

The need was felt to have available a process for preparing (per) fluorinated copolymer films, even starting from very viscous melts, having improved elongation at break.

The Applicant has found a process which solves this technical problem.

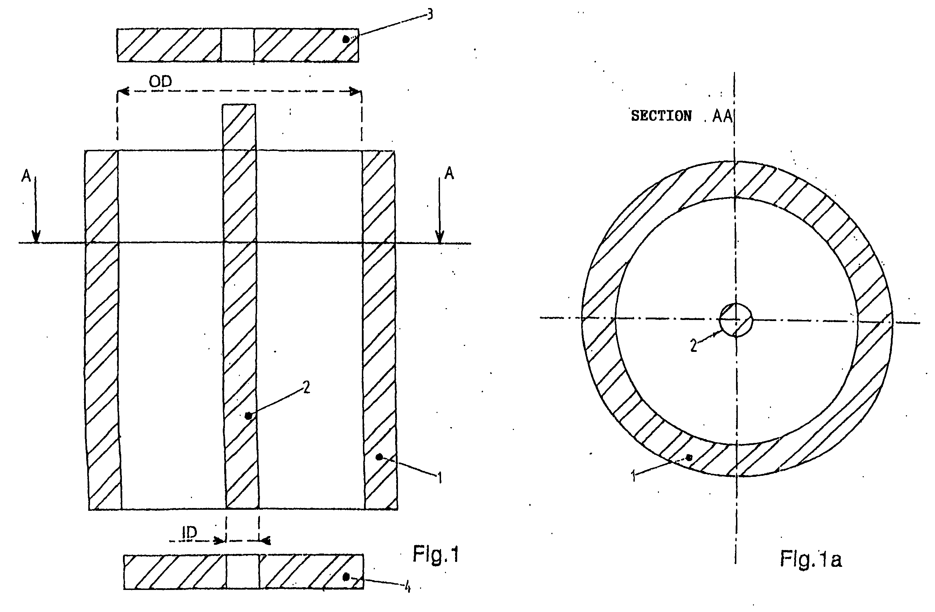

An object of the present invention is a process to prepare films or sheets of (per)fluorinated, thermoprocessable or thermoplastic polymers comprising the following steps:
a) loading of the (per) fluorinated polymer at the solid state in a mould formed of, see Fig. 1 and Fig. 1a:
   - a hollow cylinder (1), equipped with thermocouple to measure the temperature on the internal surface;
   - a cylinder (2) (chuck) having a diameter lower than that of the cylinder (1), equiaxial with cylinder (1), equipped with thermocouple to measure the temperature on the external surface;
   - two rings (3) and (4), (Fig. 1) perpendicular to the axis of the cylinders closing the mould; said rings (3) and (4) being sliding along the chuck (2) to convey inside the cylinder the pressure applied on their surfaces;
   said mould being equipped with heating means to heat the mould external surfaces;
b) degassing the mould containing the polymer, by applying on the rings a pressure generally between 10 and 50 MPa, operating at temperatures generally from 5°C to 50°C for a time preferably ranging from 10 min to 3 h;
b') polymer heating up to a temperature at which the polymer melts, during the heating pressures between 1 MPa and 50 MPa are applied inside the mould;
c) cooling of the polymer in the mould to a temperature lower than 50°C, preferably to a temperature comprised between 5°C and 40°C, operating at a pressure in the range 1 MPa- 40 MPa; solidification of the polymer and extraction from the mould of the polymer manufactured article (sleeve);
d) obtainment of the film or sheet by sleeve exfoliation, carried out by rotating the sleeve on its longitudinal axis at a speed from 1 rpm to 500 rpm, putting the sleeve surface into contact with a blade, parallel to the cylinder axis, to obtain a film with a constant thickness.

The pressure requested in steps b), b') and c) is applied to the rings (3) and/or (4) of the mould.

Preferably in b') the heating step is carrried out by using a temperature gradient from 0.5°C/min to 10°C/min.

Preferably the steps of the invention process are carried out with the following steps, making reference to a thermoprocessable polymer of TFE with (per)fluoroalkylvinylethers, for example MFA or PFA type.

Preferably b') is carried out with the following steps, making reference to a thermoprocessable polymer of TFE with (per) fluoroalkylvinylethers, for example MFA or PFA type:
S₁) polymer heating by mould heating from the temperature reached in step b) to the temperature T₁ preferably ranging from 250°C to 310°C, with a heating rate v₁ preferably ranging from 0.3°C/min to 10°C/min, by operating at a pressure P₁ preferably ranging from 10 MPa to 50 MPa;
S₂) residence time at temperature T₁ and pressure P₁ until the difference of temperature (AT) between the cylinder (1) and the cylinder (2) is lower than 20°C;
S₃) polymer heating until this melts, by mould heating at a temperature T₂ higher than T₁, T₂ preferably ranging from 290°C to 350°C, with a heating rate v₂ preferably ranging from 0.1°C/min to 7°C/min, by operating at a pressure P₂ between 5 MPa and 15 MPa;
S₄) residence time at temperature T₂ and pressure P₂ until the difference of temperature AT between the cylinder (1) and the cylinder (2) is lower than 10°C.

Preferably in c) one operates with a gradient or cooling rate ranging from 0.1°C/min to 10°C/min.

Optionally step c), making reference to a thermoprocessable polymer of TFE with (per)fluoroalkylvinylethers, for example MFA or PFA type, can be carried out with the following steps:
S₇) cooling of the polymer in the mould at temperature T₄ lower than temperature T₂, wherein T₄ preferably ranges from 250°C to 300°C, the cooling rate v₄ ranging from 0.1°C/min to 3°C/min; by operating at a pressure P₄ from 1 MPa to 15 MPa;
S₈) residence time at temperature T₄ until ΔT between the cylinder (1) and the cylinder (2) is lower than 20°C; the pressure in this step can be equal to the pressure P₄ of step S₇, or, preferably, is increased up to a value not higher than 40 MPa, so that the mould internal surfaces remain adherent to the sleeve which cools;
S₉) cooling from T₄ to temperature lower than 40°C, preferably to a temperature ranging from 5°C to 30°C, with cooling rate v₅ from 0.1°C/min to 10°C/min; by operating at a pressure P₅ from 10 MPa to 40 MPa.

The sleeve sizes obtained with the process of the present invention are for example the following:
- OD, as defined in Fig. 1, from 60 mm to 1,000 mm; preferably from 100 mm to 600 mm;
- ID, as defined in Fig. 1, from 20 mm to 900 mm;
- height from 100 mm to 1,500 mm.

Step d) can be carried out for example by rotating the cylinder on its own axis and bringing near, at a constant rate, a blade parallel to the cylinder axis, thus obtaining the formation of a continuous film or sheet with a constant thickness.

In the step S₁) the temperature reached during the heating, between 250°C and 310°C, is in function of the used thermoprocessable polymer. The maximum temperature reached in S₁ must not bring to the polymer melting and to its degradation. Generally the maximum temperature reached is about 30°C-40°C lower than the melting temperature of the polymer. It has been found that by operating in this way one avoids the formation of bubbles inside the polymer. In practice the polymer warps but allows the air to come out from the mould.

In step S₂) the residence time has the function to homogenize the temperature in the polymeric mass. For mould internal diameters of 100 mm the residence time of S₂) is about 1-2 h. For mould internal diameters of about 500 mm the residence time of S₂) is about 24-30 h.

In step S₃) the polymer is generally heated at temperature of about 10°C-40°C higher than the melting temperature.

In step S₄) the residence time has the function to homogenize the melted polymeric mass.

In step S₇) the cooling has the purpose of crystallizing the polymer.

In step S₈) the residence time has the function to homogenize the temperature and increase the polymeric mass density.

With the process of the present invention continuous exfoliated films or sheets of thermoplastic (per)fluorinated polymers can be obtained having a productivity up to 30 m/min. The thickness of the exfoliated films obtained, as said, is substantially constant and can range from 5 µm to 5,000 µm, preferably from 10 *µ*m to 3,000 *µ*m.

The (per)fluorinated polymers which can be used in the process of the present invention are, as said, thermoplastic (per) fluorinated polymers, in particular the polymers obtained from the TFE polymerization with perfluoroalkylvinylethers.

More specifically the thermoplastic (per)fluorinated polymers are copolymers comprising:
a1) from 0.5 to 13% by weight of perfluoromethylvinylether;
b1) from 0.05 to 3% by weight of one or more fluorinated monomers selected from the group consisting of:
   (1)

      R¹O-CF = CF₂ (I)

      wherein R¹ is selected from:
      i) -R_{F}-T wherein R_{F} is a C₂-C₁₂ perfluoroalkylene radical and T is F, Cl or H;
      ii) 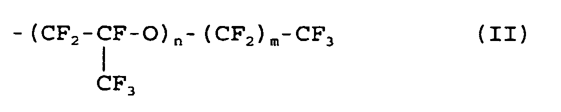 wherein n is a number beetween 1 and 4 and m is a number between 0 and 3;
      iii) 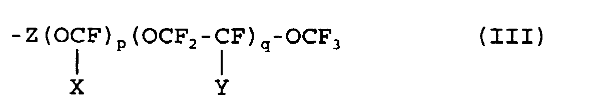 wherein the units (OCXF) and (OCF₂-CFY) are randomly distributed along the chain;
         X and Y represent, independently the one from the other, F or CF₃;
         Z is -(CFX)- or -(CF₂-CFY)-;
         p and q, equal to or different from each other, are numbers between 0 and 10;
         the number average molecular weight of the monomer b1) (1) (iii) being from 200 to 2,000, extremes included;
      iv) 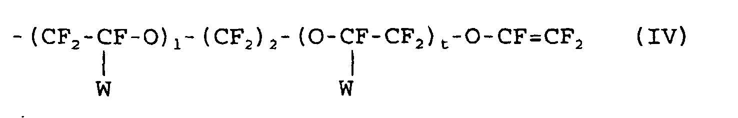 wherein W is Cl, F or CF₃. and 1 and t, independently the one from the other, are numbers from 0 to 5;
      v) 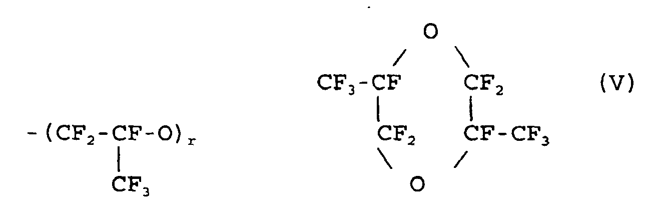 wherein r is a number between 0 and 4;
   (2)

      R²-CH = CH₂ (VI)
   wherein R² is a group R_{F}-T, R_{F} and T being as above;
c1) TFE in per cent by weight such that the sum of the monomer percentages is equal to 100% by weight (complement to 100% by weight).

The preferred percentages by weight of a1), b1) and c1) are the following:
a1) PMVE 2-9%;
b1) on the whole 0.1-1.5%;
c1) TFE difference to 100%.

In the comonomers b1) (1) (i), preferably R_{F} is a C₂-C₆ perfluoroalkylene radical and T is F. Comonomers b1) (1) (i) are, for example, perfluoroethylvinylether, perfluoropropylvinylether and perfluorobutylvinylether; preferably perfluoroethylvinylether (R_{f}=C₂F₄) and perfluoropropylvinylether (R_{f}=C₃F₆) are used.

The comonomers b1) (1) (ii) are for example described in the patent EP 75,312. Examples of these comonomers are those wherein in formula (II) n is equal to 1 or 2 and m is equal to 2.

The comonomers b1) (1) (iii) are obtained by dechlorination of compounds of the following formula: 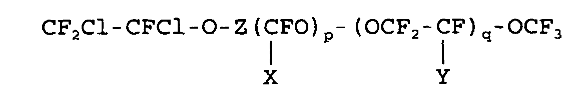 which can be prepared as described in USP 4,906,770 (Example 11).

The comonomers b1) (1) (iv) can be prepared according to the method described in the patent GB 1,106,344. Among these comonomers the compound of formula (VI) can for example be mentioned:

CF₂ = CF-O-(CF₂-CF₂)-O-CF = CF₂ (VI)

The comonomers b1) (1) (v) can be prepared according to the method described in USP 4,013,689.

In the comonomers b1) (2) preferably R² is a C₂-C₆ radical. Examples of these comonomers are perfluorobutylethylene and perfluorohexylethylene.

The above comonomers b1) can separately be copolymerized with TFE and perfluoromethylvinylether to give terpolymers, or mixtures of comonomers b1) with a1) and c1) can be used to give copolymers having a greater composition complexity.

These thermoprocessable copolymers can be prepared by radical polymerization in aqueous or organic medium.

Preferably as b1) perfluoroethylvinylether and/or perfluoropropylvinylether are used.

The TFE copolymers containing said monomers are commercially available with the MFA name.

The methods to obtain these polymers are known: see for example USP 5,463,006.

As comonomer b1) in the perfluoromethylvinylether/TFE copolymer one can alternatively use, in the same amounts mentioned above for the above fluorinated comonomers b1), even one or more fluorinated dioxoles having formula: 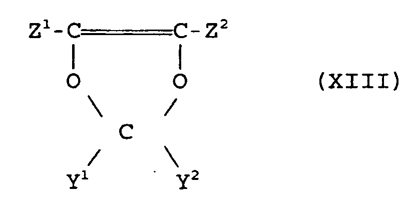 wherein Z¹ and Z², equal to or different from each other, have the following meanings: F, Cl, H, or OR^{A}T^{A} wherein R^{A} is a C₁-C₅ perfluoroalkylene radical, and T^{A} is F or C1, with the proviso that Z¹ and Z² cannot be both C1 or OR^{A}T^{A}; Y¹ and Y², equal to or different from each other, are F or CF₃.

When the comonomer b1) of general formula (XIII) is used in the (co)polymer synthesis, the preferred percentages by weight of the comonomers a1), b1) and c1) in the terpolymer are the following:
a1) 2-9%;
b1) fluorodioxole/fluorodioxoles 0.1-1.5%;
c1) TFE difference to 100%.

Preferably in the (co)polymer synthesis a fluorodioxole of formula (XIII) is used.

The preferred fluorodioxoles are the following: 4,5-difluoro-2,2-trifluoromethyl-1,3-dioxole, perfluorodioxole PD and the perfluorodioxoles described in EP 633,257.

Another thermoprocessable (per)fluorinated polymer is PFA, which is a copolymer of TFE with propylvinylether wherein the comonomer amount is between 1.5% and 4.5% by weight, preferably from 2.5% to 3.5% by weight. See USP 3,635,926.

A further thermoprocessable polymer which can be used in the process of the present invention is the TFE copolymer with hexafluoropropene known as FEP. The FEP has melting temperature between 260°C and 265°C. See USP 2,946,763.

In addition to the previous monomers, FEP can contain from 0.5 to 3% by weight of a third comonomer selected between perfluoropropylvinylether and perfluoroethylvinylether. See USP 4,029,868.

In the process of the present invention mixtures of the above thermoplastic (per)fluorinated polymers with inorganic fillers as, for example, carbon, and/or organic fillers as, for example, polyimides and polyamidoimides, can also be used. The amount of the added fillers can range from 0.1% to 40% by weight on the total of the mixture fillers + thermoplastic polymers.

The Applicant has found that with the process of the present invention films having isotropic mechanical properties in the exfoliation (MD) and transversal (TD) direction, are obtained. Besides, unexpectedly, said films show improved elongation at break values in MD and in TD in comparison with the films obtained from the same polymer by extrusion.

The following Examples illustrate with non limitative purposes the present invention.

### EXAMPLES

### EXAMPLE 1

### Preparation of a MFA film by exfoliation

2 kg of Hyflon® MFA powder MFI 2.5 (ASTM D 1238-52T) are transferred into a stainless steel cylindrical mould having the following sizes: OD = 120 mm; ID = 40 mm; height = 340 mm. The two opposite cylinder faces are closed with two bronze rings having the following sizes: OD = 119.8 mm; ID = 40.2 mm; height = 20 mm.

The mould is placed in a vertical press and on the upper bronze ring a pressure of 20 MPa is applied to remove the most part of air and of the gases contained in the powder. After 20 minutes the applied pressure is decreased and the mould is wound with an electrical heater and put in a vertical press with heated plates.

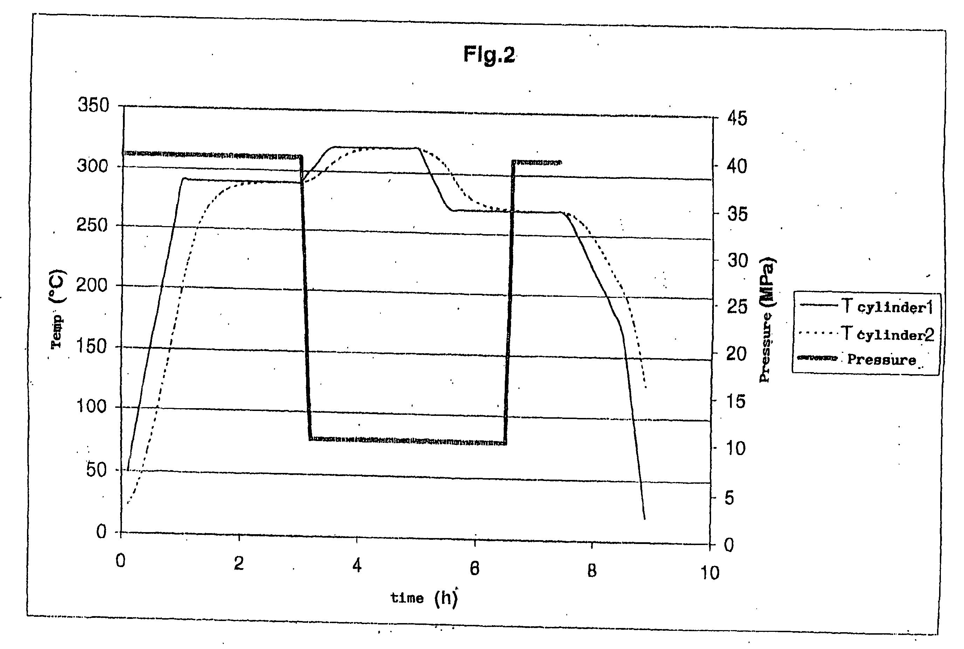

The mould is then subjected to the thermal cycle reported in Fig. 2, wherein the continuous line represents the temperature of the cylinder 1 and the broken line the temperature of the cylinder 2. The pressure is indicated with a line having a bigger thickness.

The mould is then subjected to the following thermal cycle:
S₁) heating from room temperature to 290°C with a heating rate of 4.5°C/min, constant pressure of 40 MPa;
S₂) residence time at 290°C and constant pressure of 40 MPa for 2 hours, so that the temperature difference between the internal wall of the cylinder (1) and the external wall of the cylinder (2) (AT) is lower than 20°C;
S₃) heating from 290°C to 320°C with heating rate of 1°C/min and pressure of 10 MPa;
S₄) residence time at 320°C and constant pressure of 10 MPa for 1.5 hours, so that the difference of temperature AT is lower than 20°C.

The cooling step is carried out by the following subsequent steps:
S₇) cooling from 320°C to 270°C at the pressure of 10 MPa with cooling rate of 1.6°C/min;
S₈) residence time at the temperature of 270°C for two hours, operating during the first hour at the pressure of 10 MPa and in the second hour at the pressure of 40 MPa; at the end of the two hours the difference of temperature AT results lower than 20°C;
S₉) cooling from 270°C to room temperature (25°C), with cooling rate of 0.5°C/min; by operating at a pressure of 40 MPa.

When the mould has been cooled a sleeve is extracted having the following sizes: OD = 120 mm; ID = 80 mm; height = 150 mm.

The sleeve is let rotate along its central longitudinal axis at a rotation speed of 30 rpm and exfoliated on the surface, along the whole length, with a blade having a length equal to or higher than the sleeve heigth. The exfoliation is carried out at room temperature (25°C) so as to obtain thin films having the thickness as indicated hereunder. During the exfoliation the blade is let move towards the sleeve so as to maintain the thickness of the exfoliated film unchanged. Films of various thicknesses have been obtained, depending on the advancement rate of the blade towards the sleeve. The thicknesses of the obtained films have been, of 25 *µ*m, 50 *µ*m, 80 µm, 100 µm and 150 µm, 1 mm, respectively.

On the film having 1 mm thickness the stress and elongation at break was determined according to ASTM D 638 in the two orthogonal, longitudinal (MD) and transversal (TD) directions. The longitudinal direction is that in the way of the film exfoliation direction.

The obtained results are reported in Table 1.

### EXAMPLE 2 (comparative)

The polymer Hyflon® MFA MFI 2.5 (ASTM D 1238-52T) is subjected to extrusion by operating at 360°C by Braebender extruder to obtain granules. The extrusion temperature used is high, since the polymer MFI value is rather low.

Successively the granules are extruded in films using an extruder having a diameter of 45 mm with a ratio length/diameter of 24. The temperature profile set on the cylinder is the following: T¹ = 335°C; T² = 350°C; T³ = 355°C; T⁴ = 360°C.

The extruder head temperature is maintained at 360°C. Under these conditions one reaches a temperature of the melted polymer of 373°C.

The extruded compound is fed to a calender wherein the rolls are maintained at 250°C. Films having a thickness between 0.3 mm and 1 mm are obtained.

On the film having 1 mm thickness the stress and elongation at break was determined according to ASTM D 638 in the two orthogonal, longitudinal (MD) and transversal (TD) directions. The obtained results are reported in Table 1. The longitudinal direction is that in the film extrusion direction.

### Comment to Table 1

The Table shows that, the polymer being equal, in comparison with the film obtained by extrusion, the exfoliated film shows uniform mechanical properties in the two MD and TD directions; the exfoliated film shows an improved elongation at break both in MD and in TD, while the stress at break values are substantially of the same order of magnitude in the two directions in comparison with the extruded film.

**Table 1**

| Determination of the stress and elongation at break of the film obtained by exfoliation according to the process of the present invention (Ex. 1) and of that obtained by extrusion, at the temperatures of 23°C and 160°C. The determination was carried out in the longitudinal (MD) and transversal (TD) direction | | | | | | | | |
|---|---|---|---|---|---|---|---|---|
| Ex. | elongation and stress at break at 23°C | | | | eleongation and stress at break at 160°C | | | |
| | elong. at break % | | stress at break MPa | | elong. at break % | | stress at break MPa | |
| | MD | TD | MD | TD | MD | TD | MD | TD |
| 1 | 400 | 450 | 31 | 30 | 410 | 510 | 13 | 14 |
| 2 comp | 160 | 380 | 38 | 25 | 180 | 380 | 17 | 10 |

## Claims

1. A process to prepare films or sheets of thermoprocessable (per) fluorinated polymers comprising the following steps:
a) loading of the (per) fluorinated polymer at the solid state in a mould formed of, see Fig. 1 and Fig. 1a:
- a hollow cylinder (1), equipped with thermocouple to measure the temperature on the internal surface;
- a cylinder (2) (chuck) having a diameter lower than that of the cylinder (1), equiaxial with cylinder (1), equipped with thermocouple to measure the temperature on the external surface;
- two rings (3) and (4), (Fig. 1) perpendicular to the axis of the cylinders closing the mould; said rings (3) and (4) being sliding along the chuck (2) to convey inside the cylinder the pressure applied on their surfaces;
said mould being equipped with heating means to heat the mould external surfaces;
b) degassing the mould containing the polymer, by applying on the rings a pressure between 10 and 50 MPa, operating at temperatures from 5°C to 50°C for a time ranging from 10 min to 3 h;
b') polymer heating up to a temperature at which the polymer is at the melted state, exerting inside the mould pressures between 1 MPa and 50 MPa;
c) cooling of the polymer in the mould to a temperature lower than 50°C, preferably to a temperature between 5°C and 40°C, operating at a pressure in the range 1 MPa-40 MPa; after solidification of the polymer, extraction from the mould of the polymer manufactured article (sleeve);
d) obtainment of the film or sheet by sleeve exfoliation, carried out by rotating the sleeve on its longitudinal axis at a speed from 1 rpm to 500 rpm, putting the sleeve surface into contact with a blade, parallel to the cylinder axis, to obtain a film with a constant thickness.

2. A process according to claim 1, wherein in step b') the heating step is carrried out by using a temperature gradient from 0.5°C/min to 10°C/min.

3. A process according to claims 1-2, wherein b') is carried out with the following steps, making reference to a thermoprocessable polymer of TFE with (per)fluoroalkylvinylethers:
S₁) polymer heating by mould heating from the temperature reached in step b) to a temperature T₁ ranging from 250°C to 310°C, with a heating rate v₁ ranging from 0.3°C/min to 10°C/min, by operating at a pressure P₁ ranging from 10 MPa to 50 MPa;
S₂) residence time at temperature T₁ and pressure P₁ until the difference of temperature (AT) between the cylinder (1) and the cylinder (2) is lower than 20°C;
S₃) polymer heating until melting, by mould heating at a temperature T₂ higher than T₁, T₂ ranging from 290°C to 350°C, with a heating rate v₂ ranging from 0.1°C/min to 7°C/min, by operating at a pressure P₂ between 5 MPa and 15 MPa;
S₄) residence time at temperature T₂ and pressure P₂ until the difference of temperature AT between the cylinder (1) and the cylinder (2) is lower than 10°C.

4. A process according to claims 1-3, wherein in c) one operates with a cooling gradient ranging from 0.1°C/min to 10°C/min.

5. A process according to claims 1-4, wherein c) is carried out with the following steps, referring to a TFE thermoprocessable polymer with (per)fluoroalkylvinylethers:
S₇) cooling of the polymer in the mould at temperature T₄ lower than temperature T₂, wherein T₄ ranges from 250°C to 300°C, the cooling rate v₄ ranging from 0.1°C/min to 3°C/min; by operating at a pressure P₄ from 1 MPa to 15 MPa;
S₈) residence time at temperature T₄ until AT between the cylinder (1) and the cylinder (2) is lower than 20°C; the pressure being equal to the pressure P₄, or preferably it is increased up to a value not higher than 40 MPa;
S₉) cooling from T₄ to a temperature lower than 40°C, preferably to a temperature ranging from 5°C to 30°C with cooling rate v₅ from 0.1°C/min to 10°C/min; by operating at a pressure P₅ from 10 MPa to 40 MPa.

6. A process according to claims 3-5, wherein in S₁ one operates at a temperature of about 30°C-40°C lower than the polymer melting temperature.

7. A process according to claims 3-6, wherein in step S₃) one operates at temperatures of about 10°C-40°C higher than the polymer melting temperature.

8. A process according to claims 1-7, wherein TFE thermoplastic (per) fluorinated polymers with perfluoroalkylvinylethers are used.

9. A process according to claim 8, wherein the TFE thermoplastic (per)fluorinated polymers with perfluoroalkylvinylethers comprise:
a1) from 0.5 to 13% by weight of perfluoromethylvinylether;
b1) from 0.05 to 3% by weight of one or more fluorinated monomers selected from the group consisting of:
(1)
R¹O-CF = CF₂ (I)
wherein R¹ is selected from:
i) -R_{F}-T wherein R_{F} is a C₂-C₁₂ perfluoroalkylene radical and T is F, C1 or H;
ii) 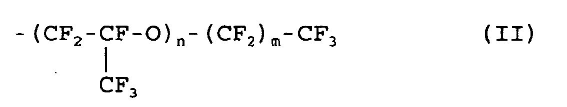 wherein n is a number between 1 and 4 and m is a number between 0 and 3;
iii) 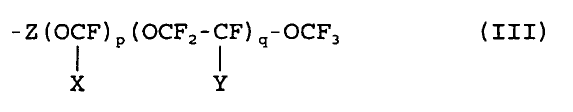 wherein the units (OCXF) and (OCF₂-CFY) are randomly distributed along the chain;
X and Y represent, independently the one from the other, F or CF₃;
Z is -(CFX)- or -(CF₂-CFY)-;
p and q, equal to or different from each other, are numbers between 0 and 10;
the number average molecular weight of the monomer b1) (1) (iii) being from 200 to 2,000, extremes included;
iv) 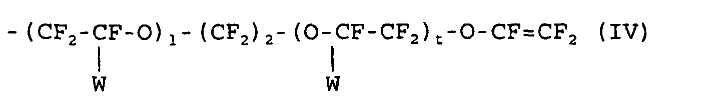 wherein W is C1, F or CF₃, and 1 and t, independently the one from the other, are numbers from 0 to 5;
(v) 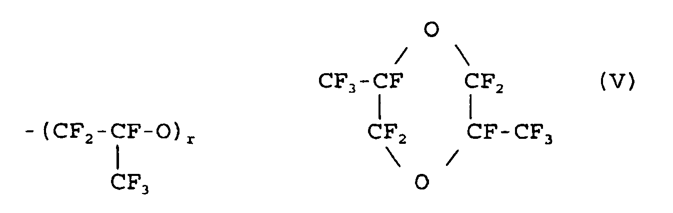 wherein r is a number between 0 and 4;
(2)
R²-CH = CH₂ (VI)
wherein R² is a group R_{F}-T, R_{F} and T being as above;
c1) TFE, the complement to 100% by weight.

10. A process according to claim 9, wherein the preferred percentages by weight of a1), b1) and c1) are the following:
a1) 2-9%;
b1) 0.1-1.5%;
c1) difference to 100%.

11. A process according to claims 9-10, wherein in the comonomers b1) (1) (i), R_{F} is a C₂-C₆ perfluoroalkylene radical and T is F.

12. A process accordingto claim 11, wherein the comonomer b1) (1) (i) is selected between perfluoroethylvinylether and perfluoropropylvinylether.

13. A process according to claim 9, wherein b1) is a monomer selected among fluorinated dioxoles having formula: 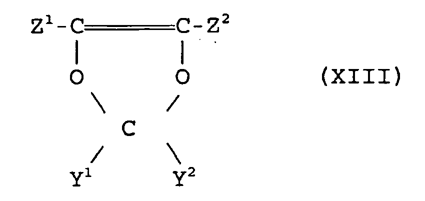 wherein Z¹ and Z², equal to or different from each other, have the following meanings: F, C1, H, or OR^{A}T^{A} wherein R^{A} is a C₁-C₅ perfluoroalkylene radical, and T⁴ is F or C1,
with the proviso that Z¹ and Z² cannot be both C1 or OR^{A}T^{A}; Y¹ and Y², equal to or different from each other, are F or CF₃.

14. A process according to claim 13, wherein the percentages by weight of the comonomers a1), b1) and c1) in the terpolymer are the following:
a1) 2-9%;
b1) fluorodioxole/fluorodioxoles 0.1-1.5%;
c1) TFE difference to 100%.

15. A process according to claim 8, wherein a copolymer of TFE with propylvinylether is used wherein the comonomer amount is between 1.5% and 4.5% by weight, preferably from 2.5% to 3.5% by weight.

16. A process according to claims 1-7 wherein the TFE copolymer with hexafluoropropene is used.

17. A process according toclaim 16, wherein the copolymer contains from 0.5 to 3% by weight of a third comonomer selected between perfluoropropylvinylether and perfluoroethylvinylether.

18. A process according to claims 1-17, wherein mixtures of thermoplastic (per)fluorinated polymers with inorganic fillers are used.

19. A process according to claim 18, wherein the amount of the inorganic fillers ranges from 0.1% to 40% by weight on the total of the mixture formed by thermoplastic polymers and fillers.

20. Articles obtainable with the process according to claims 1-19.

21. Article according to claim 20 formed of a sleeve having the following sizes: OD, as defined in Fig. 1, from 60 mm to 1,000 mm; preferably from 100 mm to 600 mm; ID, as defined in Fig. 1, from 20 mm to 900 mm; height from 100 mm to 1,500 mm.

## Patentansprüche

1. Ein Verfahren zur Herstellung von Filmen oder Lagen aus wärmebehandelbaren (Per)fluorierten Polymeren, enthaltend die folgenden Schritte:
a) beschicken einer Form mit (Per)fluorierten Polymer in festem Zustand, die, siehe Fig.1 und Fig.la, gebildet ist aus:
- einem Hohlzylinder (1), der mit einem Thermocouple zum Messen der Temperatur auf der inneren Oberfläche ausgestattet ist;
- einen Zylinder (2) (Futter), der einen geringeren Durchmesser aufweist, als der Zylinder (1), gleichachsig mit Zylinder (1), ausgestattet mit einem Thermocouple zum Messen der Temperatur auf der äußeren Oberfläche;
- zwei Ringe (3) und (4), (Fig.1) senkrecht zur Achse der Zylinder, die die Form verschließen; wobei besagte Ringe (3) und (4) entlang des Futters verschiebbar sind wodurch der Druck im Inneren des Zylinders, der auf die Oberflächen ausgeübt wird, übertragen wird;
wobei die Form mit Heizmitteln zum Heizen der äußeren Oberflächen der Form ausgestattet ist;
b) Entgasen der Form, die das Polymer enthält, indem auf die Ringe ein Druck zwischen 10 und 50 MPa ausgeübt wird, bei Betriebstemperaturen zwischen 5°C und 50°C für einen Zeitraum zwischen 10 min und 3h;
b') Erwärmen des Polymers auf eine Temperatur bei der das Polymer in einen geschmolzenen Zustand übergeht, wobei innerhalb der Form ein Druck zwischen 1 MPa und 50 MPa angelegt wird;
c) Abkühlen des Polymers in der Form auf eine Temperatur unterhalb von 50°C, vorzugsweise auf eine Temperatur zwischen 5°C und 40°C, bei einer Betriebstemperatur im Bereich von 1 MPa - 40 MPa; nach Erstarren des Polymers Extraktion des so hergestellten Polymerartikels (Schlauch) aus der Form;
d) Erhalten des Films oder der Lage durch Schlauch-Aufblätterung, die durchgeführt wird, indem der Schlauch um seine Längsachse bei einer Geschwindigkeit von 1 Umdrehung/Minute bis 500 Umdrehungen/Minute rotiert wird, Herstellen eines Kontakts zwischen der Schlauchoberfläche mit einer zur Zylinderachse parallelen Klinge, wodurch ein Film mit konstanter Dicke erhalten wird.

2. Ein Verfahren nach Anspruch 1, wobei in Schritt b') der Erwärmungsschritt durchgeführt wird, indem ein Temperaturgradient von 0,5°C/min bis 10°C/min verwendet wird.

3. Ein Verfahren nach einem der Ansprüche 1-2, wobei b') mit den folgenden Schritten durchgeführt wird, wobei Bezug genommen wird auf ein wärmebehandelbares Polymer aus TFE mit (Per)fluoralkylvinylethern:
S₁) Erwärmen des Polymers durch Erwärmen der Form von der Temperatur die in Schritt b) erreicht wurde, auf eine Temperatur T₁ im Bereich zwischen 250°C und 310°C, mit einer Heizrate v₁ im Bereich von 0,3°C/min bis 10°C/min, durch Anlegen eines Drucks P₁ im Bereich von 10MPa bis 50 MPa;
S₂) Verweildauer bei Temperatur T₁ und Druck P₁ bis die Temperaturdifferenz (ΔT) zwischen dem Zylinder (1) und dem Zylinder (2) geringer als 20°C ist;
S₃) Erwärmen des Polymers bis zur Schmelze durch Erwärmen der Form bei einer Temperatur T₂ oberhalb von T₁, wobei T₂ im Bereich von 290°C und 350°C liegt bei einer Heizrate v₂ im Bereich zwischen 0,1°C/min und 7°C/min durch Anlegen eines Drucks P₂ zwischen 5 MPa und 15MPa;
S₄) Verweildauer bei Temperatur T₂ und Druck P₂ bis die Temperaturdifferenz (ΔT) zwischen dem Zylinder (1) und dem Zylinder (2) geringer als 10°C ist.

4. Ein Verfahren nach einem der Ansprüche 1-3, wobei in c) mit einem Abkühlgradienten gearbeitet wird, der im Bereich von 0,1°C/min und 10°C/min liegt.

5. Ein Verfahren nach einem der Ansprüche 1-4, wobei c) mit den folgenden Schritten durchgeführt wird, wobei Bezug genommen wird auf ein wärmebehandelbares Polymer aus TFE mit (Per)fluoralkylvinylethern:
S₇) Abkühlen des Polymers in der Form bei einer Temperatur T₄, die geringer ist als die Temperatur T₂, wobei T₄ im Bereich von 250°C bis 300°C liegt, die Abkühlrate v₄ im Bereich von 0,1°C/min bis 3°C/min liegt; durch Anlegen eines Drucks P₄ im Bereich von 1 MPa bis 15 MPa;
S₈) Verweildauern bei Temperatur T₄ bis ΔT zwichen dem Zylinder (1) und dem Zylinder (2) geringer als 20°C ist; wobei der Druck gleich dem Druck p₄ ist, oder es wird vorzugsweise bis zu einem Wert gesteigert, der nicht höher als 40 MPa ist;
S₉) Abkühlen von T₄ auf eine Temperatur unterhalb von 40°C, vorzugsweise auf eine Temperatur im Bereichz von 5°C bis 30°C mit einer Abkühlrate v₅ von 0,1°C/min bis 10°C/min; durch Anlegen eines Drucks P₅ im Bereich von 10 MPa bis 40 MPa.

6. Ein Verfahren nach einem der Ansprüche 3-5, wobei in S₁ bei einer Temperatur gearbeitet wird, die etwa 30°C-40°C niedriger ist, als die Schmelztempertur des Polymers.

7. Ein Verfahren nach einem der Ansprüche 3-6, wobei in Schritt S₃) bei Temperaturen gearbeitet wird, die etwa 10°C-40°C oberhalb der Schmelztemperatur des Polymers liegen.

8. Ein Verfahren nach einem der Ansprüche 1-7, wobei TFE thermoplastische (Per)fluorierte Polymere mit Perfluoralkylvinylethern verwendet werden.

9. Ein Verfahren nach Anspruch 8, wobei die TFE thermoplastischen (Per)fluorierten Polymere mit Perfluoralkylvinylethern enthalten:
a1) zwischen 0,5 und 13 Gew.-% Perfluormethylvinylether;
b1) zwischen 0,05 und 3 Gew.-% eines oder mehrerer fluorierter Monomere, die ausgewählt sind aus der Gruppe, die besteht aus:
(1)
R¹O-CF=CF₂ (I)
wobei R¹ ausgewählt ist aus:
i) -R_{F}-T wobei R_{F} ein C₂-C₁₂-Perfluoralkylenradikal ist und T ist F, Cl oder H;
ii) 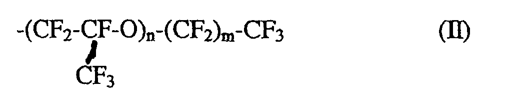 wobei n eine Zahl zwischen 1 und 4 ist und m eine Zahl zwischen 0 und 3;
iii) 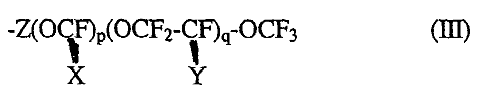 wobei die Einheiten (OCXF) und (OCF₂-CFY) zufällig entlang der Kette verteilt sind; X und Y unabhängig voneinander F oder CF₃ darstellen;
Z ist -(CFX)- oder -(CF₂-CFY)-;
p und q, sind gleich oder unterschiedlich zueinander, Zahlen zwischen 0 und 10;
das durchschnittliche Molekulargewichtszahl des Monomers b1) (1) (iii) liegt zwischen 200 und 2000, wobei die Extreme eingeschlossen sind;
iv) 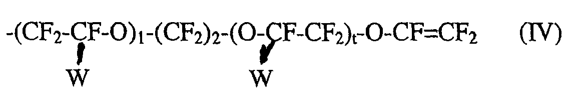 wobei W Cl, F oder CF₃ ist und 1 und t, unabhängig voneinander Zahlen zwischen 0 und 5 sind;
v) 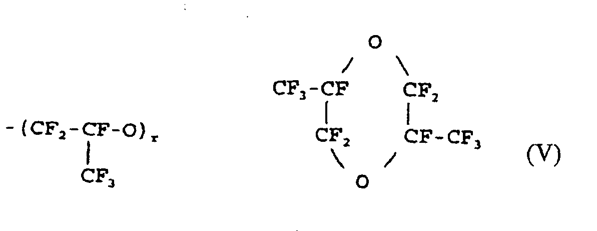 wobei r eine Zahl zwischen 0 und 4 ist;
(2)
R²-CH=CH₂ (VI)
wobei R² eine Gruppe R_{F}-T ist, wobei R_{F} und T wie oben definiert sind;
c1) TFE, das Komplement von 100 Gew.-%.

10. Ein Verfahren nach Anspruch 9, wobei die bevorzugten Gewichtsprozente von a1), b1) und c1) die folgenden sind:
a1) 2-9%;
b1) 0,1-1,5%
c1) Differenz zu 100%.

11. Ein Verfahren nach einem der Ansprüche 9-10, wobei in den Comonomeren b1) (1) (i), R_{f} ein C₂-C₆-Perfluoralkylenradikal und T F ist.

12. Ein Verfahren nach Anspruch 11, wobei das Comonomer b1) (1) (i) ausgewählt ist aus Perfluorethylvinylether und Perfluorpropylvinylether.

13. Ein Verfahren nach Anspruch 9, wobei b1) ein Monomer ist, das aus fluorierten Dioxolen mit folgender Formel ausgewählt ist: 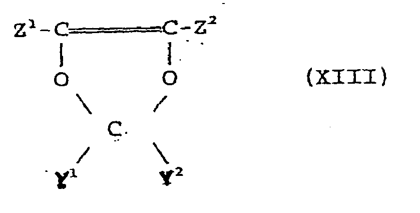 wobei Z¹ und Z² gleich oder unterschiedlich zueinander die folgenden Bedeutungen haben: F, Cl, H, oder OR^{A}T^{A}, wobei R^{A} ein C₁-C₅ Perfluoralkylenradikal und T^{A} F oder Cl ist,
mit der Maßgabe, daß Z¹ und Z² nicht beide Cl oder OR^{A}T^{A} sein können; Y¹ und
Y² gleich oder unterschiedlich zueinander F oder CF₃ sind.

14. Ein Verfahren nach Anspruch 13, wobei die Gewichtsprozente der Comonomere a1), b1) und c1) in dem Terpolymer die folgenden sind:
a1) 2-9%;
b1) Fluordioxol/Fluordioxole 0,1-1,5%
c1) TFE Differenz zu 100%.

15. Ein Verfahren nach Anspruch 8, wobei ein Copolymer von TFE mit Propylvinylether verwendet wird, wobei die Menge des Comonomers zwischen 1,5 Gew.-% und 4,5 Gew.-% liegt, vorzeugsweise zwischen 2,5 Gew.-% und 3,5 Gew.-%.

16. Ein Verfahren nach einem der Ansprüche 1-7, wobei das TFE Copolymer mit Hexafluorpropen verwendet wird.

17. Ein Verfahren nach Anspruch 16, wobei das Copolymer zwischen 0,5 und 3 Gew.-% eines dritten Comonomers enthält, das ausgewählt ist zwischen Perfluorpropylvinylether und Perfluorethylvinylether.

18. Ein Verfahren nach einem der Ansprüche 1-17, wobei Mischungen der thermoplastischen (Per)fluorierten Polymere mit anorganischen Füllmitteln verwendet werden.

19. Ein Verfahren nach Anspruch 18, wobei die Menge an anorganischen Füllmitteln im Bereich von 0,1 Gew.-% und 40 Gew.-% der gesamten Mischung liegt, die aus thermoplastischen Polymeren und Füllmitteln gebildet wird.

20. Artikel, die nach dem Verfahren nach einem der Ansprüche 1-19 herstellbar sind.

21. Artikel nach Anspruch 20, die aus einem Schlauch gebildet sind, der folgende Größen aufweist: OD, wie in Fig.1 defmiert, zwischen 60 mm und 1000 mm; vorzugsweise zwischen 100 mm und 600 mm; ID, wie in Fig.1 definiert, zwischen 20 mm und 900 mm; Höhe von 100 mm und 1500 mm.

## Revendications

1. Procédé de préparation de films ou de feuilles de polymères (per)fluorés thermodurcissables comprenant les étapes suivantes :
a) de chargement de polymère (per)fluoré à l'état solide dans un moule formé de, voir figure 1 et figure la :
- un cylindre creux (1) équipé d'un thermocouple pour mesurer la température de la surface interne ;
- un cylindre (2) (mandrin) ayant un diamètre inférieur à celui du cylindre (1), équiaxial avec le cylindre (1), équipé d'un thermocouple pour mesurer la température de la surface externe ;
- deux anneaux (3) et (4) (figure 1) perpendiculaires à l'axe des cylindres fermant le moule ; lesdits anneaux (3) et (4) coulissant le long du mandrin (2) pour transporter à l'intérieur du cylindre la pression appliquée sur leurs surfaces ;
ledit moule étant équipé d'un moyen chauffant pour chauffer les surfaces externes du moule ;
b) de dégazage du moule contenant le polymère, en appliquant sur les anneaux une pression comprise dans la plage allant de 10 à 50 MPa, en fonctionnant à des températures de 5 °C à 50 °C pendant un temps allant de 10 minutes à 3 heures ;
b') de chauffage du polymère à une température à laquelle le polymère est à l'état fondu, en exerçant à l'intérieur du moule des pressions comprises dans la plage allant de 1 MPa à 50 MPa ;
c) de refroidissement du polymère dans le moule à une température inférieure à 50 °C, de préférence à une température entre 5 °C et 40 °C, en fonctionnant à une pression comprise dans la plage allant de 1 MPa à 40 MPa ; après solidification du polymère, d'extraction hors du moule l'article manufacturé polymère (gaine) ;
d) d'obtention du film ou de la feuille par exfoliation de la gaine, réalisée par rotation de la gaine sur son axe longitudinal à une vitesse de 1 tour/minute à 500 tours/minute, en plaçant la surface de la gaine en contact avec une lame, parallèle à l'axe du cylindre, pour obtenir un film ayant une épaisseur constante.

2. Procédé selon la revendication 1, dans lequel dans l'étape b'), l'étape de chauffage est réalisée en utilisant un gradient de température de 0,5 °C/minute à 10 °C/minute.

3. Procédé selon les revendications 1 à 2, dans lequel l'étape b') est réalisée avec les étapes suivantes, en se référant à un polymère thermoducissable de TFE avec des éthers (per)fluoroalkylvinyliques :
S₁) chauffer le polymère par chauffage du moule à partir de la température atteinte dans l'étape b) jusqu'à la température T₁ comprise dans la plage allant de 250 °C à 310 °C, à une vitesse de chauffage v₁ comprise dans la plage allant de 0,3 °C/minute à 10 °C/minute, en fonctionnant à une pression P₁ comprise dans la plage allant de 10 MPa à 50 MPa ;
S₂) temps de séjour à la température T₁ et pression P₁ jusqu'à ce que la différence de température (ΔT) entre le cylindre (1) et le cylindre (2) soit inférieure à 20 °C ;
S₃) chauffer le polymère jusqu'à ce qu'il soit fondu, par chauffage du moule à une température T₂ supérieure à T₁, T₂ étant comprise dans la plage allant de 290 °C à 350 °C, à une vitesse de chauffage v₂ comprise dans la plage allant de 0,1 °C/minute à 7 °C/minute, en fonctionnant à une pression P₂ comprise dans la plage allant de 5 MPa à 15 MPa ;
S₄) temps de séjour à la température T₂ et pression P₂ jusqu'à ce que la différence de température (ΔT) entre le cylindre (1) et le cylindre (2) soit inférieure à 10 °C.

4. Procédé selon les revendications 1 à 3, dans lequel dans l'étape c), on fonctionne avec un gradient de refroidissement compris dans la plage allant de 0,1 °C/minute à 10 °C/minute.

5. Procédé selon les revendications 1 à 4, dans lequel l'étape c) est réalisée avec les étapes suivantes, en se référant à un polymère thermoducissable de TFE avec des éthers (per)fluoroalkylvinyliques :
S₇) refroidir le polymère dans le moule à une température T₄ inférieure à la température T₂, T₄ étant comprise dans la plage allant de 250 °C à 300 °C, à une vitesse de refroidissement v₄ comprise dans la plage allant de 0,1 °C/minute à 3 °C/minute, en fonctionnant à une pression P₄ comprise dans la plage allant de 1 MPa à 15 MPa ;
S₈) temps de séjour à la température T₄ jusqu'à ce que la différence de température (ΔT) entre le cylindre (1) et le cylindre (2) soit inférieure à 20 °C ; la pression étant équivalente à la pression P₄, ou de préférence augmentée jusqu'à une valeur inférieure à 40 MPa ;
S₉) refroidir de la température T₄ à une température inférieure à 40 °C, de préférence à une température comprise dans la plage allant de 5 °C à 30 °C, à une vitesse de refroidissement v₅ comprise dans la plage allant de 0,1 °C/minute à 10 °C/minute, en fonctionnant à une pression P₅ comprise dans la plage allant de 10 MPa à 40 MPa.

6. Procédé selon les revendications 3 à 5, dans lequel dans l'étape S₁), on fonctionne à une température d'environ 30 °C à 40 °C inférieure à la température de fusion du polymère.

7. Procédé selon les revendications 3 à 6, dans lequel dans l'étape S₃), on fonctionne à une température d'environ 10 °C à 40 °C supérieure à la température de fusion du polymère.

8. Procédé selon les revendications 1 à 7, dans lequel on utilise des polymères (per)fluorés thermoplastiques de TFE avec des éthers perfluoroalkylvinyliques.

9. Procédé selon la revendication 8, dans lequel les polymères (per)fluorés thermoplastiques de TFE avec des éthers perfluoroalkylvinyliques comprennent :
a1) de 0,5 à 13 % en poids d'éther perfluorométhylvinylique ;
b1) de 0,05 à 3 % en poids d'un ou de plusieurs monomères fluorés choisis dans le groupe consistant en :
(1)
R¹O-CF=CF₂ (I)
dans lequel R¹ est choisi parmi
i) -R_{F}-T dans lequel R_{F} est un radical perfluoroalkylène en C₂-C₁₂ et T est F, Cl ou H ;
ii) 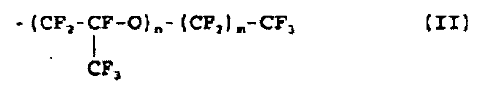 dans lequel n est un nombre compris entre 1 et 4 et m est un nombre compris entre 0 et 3 ;
iii) 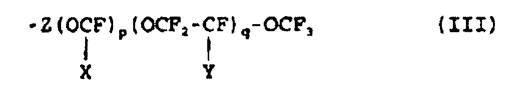 dans lequel les motifs (OCXF) et (OCF₂-CFY) sont distribués statistiquement le long de la chaîne ; X et
Y représentent, indépendamment l'un de l'autre, F ou CF₃ ;
Z est -(CFX)- ou -(CF₂-CFY)- ;
p et q, identiques ou différents l'un de l'autre, sont des nombres de 0 à 10 ; le poids moléculaire moyen en nombre du monomère b1) (1) (iii) étant compris dans la plage allant de 200 à 2000, extrêmes inclus ;
iv) 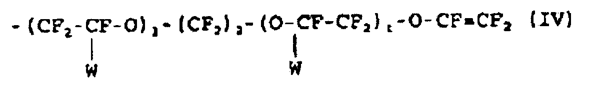 dans lequel W est Cl, F ou CF₃, et 1 et t indépendamment l'un de l'autre, sont des nombres de 0 à 5 ;
v) 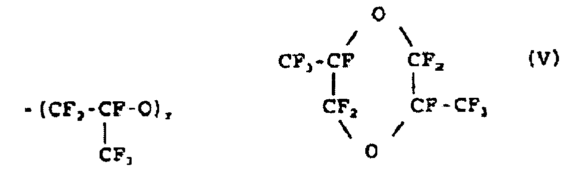 dans lequel r est un nombre compris entre 0 et 4 ;
(2)
R²-CH=CH₂ (VI)
dans lequel R² est un groupe R_{F}-T, R_{F} et T étant tels que décrits ci-dessus ;
c1) TFE, le complément à 100 % en poids.

10. Procédé selon la revendication 9, dans lequel les pourcentages préférés en poids de a1), b1) et c1) sont les suivants :
a1) 2 à 9 % ;
b1) 0,1 à 1,5 % ;
c1) complément à 100 %.

11. Procédé selon les revendications 9 à 10, dans lequel dans les comonomères b1)(1)(i), R_{F} est un radical perfluoroalkylène en C₂-C₆ et T est F.

12. Procédé selon la revendication 11, dans lequel le comonomère b1)(1)(i) est choisi entre l'éther perfluoroéthylvinylique et l'éther perfluoropropylvinylique.

13. Procédé selon la revendication 9, dans lequel b1) est un monomère choisi parmi les dioxoles fluorés ayant la formule : 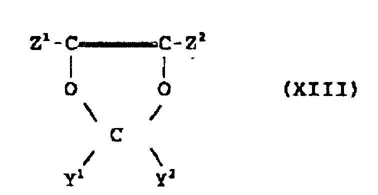 dans laquelle Z¹ et Z², identiques ou différents l'un de l'autre, ont les significations suivantes : F, Cl, H ou OR^{A}T^{A} où R^{A} est un radical perfluoroalkylène en C₁-C₅, et T^{A} est F ou Cl,
à condition que Z¹ et Z² ne soient pas tous les deux Cl ou OR^{A}T^{A} ; Y¹ et Y², identiques ou différents l'un de l'autre, sont F ou CF₃.

14. Procédé selon la revendication 13, dans lequel les pourcentages en poids des comonomères a1), b1) et c1) dans le polymère sont les suivants :
a1) 2 à 9 % ;
b1) 0,1 à 1,5 % de fluorodioxole/fluorodioxoles ;
c1) complément à 100 % de TFE.

15. Procédé selon la revendication 8, dans lequel on utilise un copolymère de TFE avec un éther propylvinylique dans lequel la quantité de comonomère est comprise dans la plage allant de 1,5 % à 4,5 % en poids, de préférence de 2,5 % à 3,5 % en poids.

16. Procédé selon les revendications 1 à 7, dans lequel on utilise le copolymère de TFE avec de l'hexafluoropropène.

17. Procédé selon la revendication 16, dans lequel le copolymère contient de 0,5 à 3 % en poids d'un troisième copolymère choisi entre l'éther perfluoropropylvinylique et l'éther perfluoroéthylvinylique.

18. Procédé selon les revendications 1 à 17, dans lequel on utilise des mélanges de polymères (per)fluorés thermoplastiques avec des charges inorganiques.

19. Procédé selon la revendication 18, dans lequel la quantité des charges inorganiques est comprise dans la plage allant de 0,1 % à 40 % en poids par rapport au total du mélange formé par des polymères thermoplastiques et des charges.

20. Articles pouvant être obtenus par le procédé selon les revendications 1 à 19.

21. Article selon la revendication 20, formé d'une gaine ayant les tailles suivantes : diamètre externe (OD), comme défini sur la figure 1, de 60 mm à 1000 mm ; de préférence de 100 mm à 600 mm ; diamètre interne (ID), comme défini sur la figure 1, de 20 mm à 900 mm ; hauteur de 100 mm à 1500 mm.
